# EUROPEAN PATENT SPECIFICATION

(11) **EP 1 024 710 B1**
(45) Date of publication and mention of the grant of the patent: **20.03.2002**
(21) Application number: 98947650.2
(22) Date of filing: 07.10.1998
(51) Int. Cl.: A23L 1/314

(54) **A NOVEL COOKED SAUSAGE AND A METHOD FOR MAKING THE SAME**
GEKOCHTE WURST UND VERFAHREN ZU IHRER HERSTELLUNG
NOUVELLE SAUCISSE CUITE ET PROCEDE DE FABRICATION Y RELATIF

(30) Priority: 24.10.1997 DE 19747197
(43) Date of publication of application: 09.08.2000
(73) Proprietor: BERNARD MATTHEWS LIMITED, Norwich Norfolk, NR9 5QD (GB)
(72) Inventor: MATTHEWS, Bernard, Trevor, Norwich, Norfolk NR9 5QD (GB); JOLL, David, John, Corpusty, Norfolk NR11 6QF (GB); KOPPERS, Werner, D-26215 Wiefelstede (DE); BÜSE, Friedrich, D-26215 Oldenburg (DE)
(74) Representative: Crump, Julian Richard John
(86) International application number: GB9802999
(87) International publication number: WO9921438

(56) References cited:
- EP-A- 0 029 503
- EP-A- 0 478 526
- US-A- 4 492 712

## Description

The present invention relates to a novel cooked sausage and to a method for making the same. In particular, the invention relates to a cooked sausage comprising meat and yogurt.

At the time of writing, there is a general consumer demand for meat and sausage products that are easier to digest and contain fewer calories than traditional meat sausages. Previous attempts have been made to meet this demand by providing reduced fat sausages which are widely perceived by consumers to be healthier than the traditional variety. To this end, sausages have been produced using meat that is as lean as possible. Poultry meat, for example, has been used increasingly in the production of sausages and other consumer meat products.

EP-A-0029503 (Stauffer Chemical Company Limited) discloses an improved fermented sausage which comprises meat and a cultured dairy product. The cultured dairy product, which is preferably derived from whey and used dry, is cultured using traditional yogurt starter cultures comprising L. Bulgaricus and S. Thermophilus until a final pH in the range of 4.2 to 4.3 is reached. On admixing the dairy product to a meat emulsion, a final product pH in the range of 4.5 to 4.8 is achieved, without requiring any further fermentation of the meat product. After stuffing, the sausage is ripened, dried and/or smoked as required.

EP-A-0478526 (Vleeswarenfabrieken Imperial Naamloze Vennootschap) discloses a meat product, for example a sausage, comprising meat and a dairy product, preferably curdled bactofugated milk, eg melted cheese or curd. EP-A-0478526 discloses that the dairy product is prepared by curdling the bactofugated milk using traditional cheese coagulating agents, such as rennet ferment or other proteolytic enzymes from vegetable or microbial origin. The dairy product, on addition to the meat, has a pH in the range of 5.0 to 5.6. The mixture is then fermented further until a final pH of 4.6 to 5.2 is reached.

An object of the present invention is to provide a novel meat product. In particular, it is an object of the present invention to provide a novel cooked sausage.

Another object of the present invention is to provide a cooked sausage that will be perceived by consumers to be healthy to eat, and which comprises fewer calories than traditional meat sausages.

Yet another object of the present invention is to provide an improved cooked sausage comprising meat and a dairy product.

According to one aspect of the present invention there is provided a cooked sausage comprising a mixture of a meat emulsion and mild yogurt substantially homogeneously dispersed through the meat emulsion, characterised in that said mixture comprises 10 to 40% by weight of said mild yogurt which is mild such that said mixture has a pH of 5.5 or more.

In a different aspect of the present invention, there is provided a method of making a cooked sausage which comprises forming a mixture of a meat emulsion and mild yoghurt having a pH of 4.8 or more or comprising an edible alkaline additive to neutralize the acidity of the yoghurt, in which mixture said yogurt is substantially homogeneously dispersed through the emulsion, forming the mixture into a sausage, and thereafter cooking the sausage; characterised in that said mixture comprises 10 to 40% by weight of said mild yogurt which is mild such that said mixture has a pH of 5.5 or more.

Said meat emulsion may comprise red meat such, for example, as beef, lamb or pork, or poultry such, for example, as turkey or chicken. Such meat has a pH of about 6.0 to 6.2 and an isoelectric point of about pH 5.0 to about 5.2. In order to provide a boiled sausage that is juicy and has a desirable texture, it has been found that it is essential to keep the pH of the mixture of meat emulsion and partially fermented yogurt at pH 5.5 or more. If the pH of the mixture falls below pH 5.5 towards the isoelectric point of the meat, the water-retaining capacity of the meat is reduced, with the result that the juiciness and texture of the final product is impaired.

Normal yogurt has a pH of about 3.6 to 5.1, typically about 4.6. It will be appreciated therefore that if such yogurt is mixed with a meat emulsion, the pH of the resultant mixture may have a pH less than 5.5. According to the present invention, a yogurt is used which has a pH of 4.8 or more, preferably 5.2 or more. Such yogurt may comprise yogurt that is prepared in the traditional manner, but is used in the process of the invention before fermentation is fully completed. Thus, after inoculation of the milk mixture, the pH of the yogurt is monitored until it reaches the desired volume. The yogurt is then made ready for use in the method of the present invention. In some embodiments, fermentation of the yogurt may be quenched by cooling the yogurt to a temperature in the range of -2 to 6°C, preferably 0 to 6°C. Preferably, the yogurt is cooled rapidly using liquid nitrogen or a plato-heat-exchanger.

In order to assist in controlling accurately the pH of the yogurt to be added to the meat emulsion, slow-working yogurt starter cultures are preferably used. Such slow working yogurt cultures may comprise Lactobacillus Bifidobacteria and Streptococcus thermophilus. Further, the yogurt is preferably stirred continuously before use to allow accurate pH control.

In some embodiments, said yogurt may comprise an edible alkaline additive to neutralize the acidity of the yogurt, Said alkaline additive may comprise, for example, carbonated soda. Phosphates could also be used to stabilize the mixture.

In some embodiments, the yogurt may be used in dried or freeze dried form.

Said mixture may comprise 60 to 90% by weight of said meat emulsion.

Preferably said mixture comprises 15 - 30% by weight of the mild yogurt.
Typically, the mixture may comprise about 24 to 26% by weight of the yogurt.

Said mixture may further comprise 0-10% by weight of various spices or other additives. In a particularly preferred embodiment of the invention, said mixture may comprise up to 10% of a pre-biotic additive such as a non-digestible carbohydrate. An example of a pre-biotic carbohydrate is inulin. Said mixture may comprise 2-7% wt inulin, which selectively promotes the activity of some health-promoting bacteria in the colon.

Said mixture of meat and yogurt may be formed into sausages in any suitable manner to those skilled in the art, including moulding and extrusion.
Preferably, the meat/yogurt mixture is extruded through a stuffing horn into a flexible sausage casing of the kind well known to those skilled in the art. However, it is also envisaged that the boiled sausage in accordance with the present invention may be formed by moulding and then forming a skin in situ by treating the surface of the sausage with a suitable acid so as to cause coagulation of the surface layer of meat.

Said meat emulsion preferably comprises an emulsion of finely comminuted meat. Said meat emulsion may be formed by comminuting whole muscle, ground, minced or mechanically separated meat. The meat may be used fresh or frozen. Said meat is preferably finely comminuted in the presence of said yogurt to form an emulsion having a soft, homogeneous consistency. In some embodiments the emulsion may further comprise coarsely ground meat, which may be substantially uniformly dispersed through the emulsion.

Preferably, the yogurt is added to the meat during comminution in small portions or continuously, for example, with the aid of pumping equipment. It is preferable to ensure that the pH of the yogurt/meat mixture does not fall below about pH 5.5, even transiently, during mixing of the yogurt with the meat. At the same time, it is preferable to ensure that the pH of the yogurt is not increased too much by the meat, such that the characteristic aroma of yogurt is lost.

An advantage of the present invention is that by adding cooled yogurt at a temperature of 0 to 6°C to the meat emulsion, the normal addition of cooled water to meat emulsions for sausage manufacture can be reduced or dispensed with altogether. Such cooled water is normally added to maintain the temperature of the emulsion below about l2°C during comminution and subsequent extrusion, and also to bind with the meat emulsion to cause the product to swell. Of course, yogurt contains a substantial proportion of water, and in accordance with the present invention, this water can be used to replace the additional water that is normally added during sausage manufacture.

Preferably the meat is chilled prior to admixture of the yogurt to a temperature in the range 0 to 8°C,

Finally, the sausage is cooked. Said sausage may be boiled. By "boiled" here is meant heating the sausage in any suitable, edible fluid, preferably water, at a temperature and for a time sufficient to cook the meat. In some embodiments the sausage may be steamed.

Preferably the sausage is boiled at a temperature in the range 60 to 80°C, more preferably in the range of 70 to 75°C, eg 72°C. Alternatively, the sausage may be cooked in hot air and/or hot smoke. Preferably, the sausage is cooked at a sufficient temperature to kill the yogurt cultures, so as to prevent further fermentation of the yogurt in the finished product.

Thus, the present invention provides a novel cooked sausage containing meat and yogurt and also a method for manufacturing this product. The cooked sausage of the invention is relatively high in protein, but contains reduced fat as compared with a conventional meat sausage. The yogurt adds a distinctive flavour and aroma to the product which is characteristic of yogurt. The pH of the yogurt when added to the meat emulsion is sufficient low that the yogurt has the characteristic flavour and aroma of normal yogurt, but is not so low as to reduce the pH of the meat/yogurt mixture below about pH 5.5, so that the emulsion retains its water binding properties to ensure that a sausage is produced that is desirably juicy and has attractive organoleptic quality.

Following is a description by way of example only with reference to the accompanying drawings of methods occurred in the present invention into effect. In the drawings:-
Figure 1A is a schematic, isometric view of a cooked sausage in accordance with the present invention.
Figure 1B is a schematic, isometric view of a slice of a cooked sausage in accordance with the present invention.

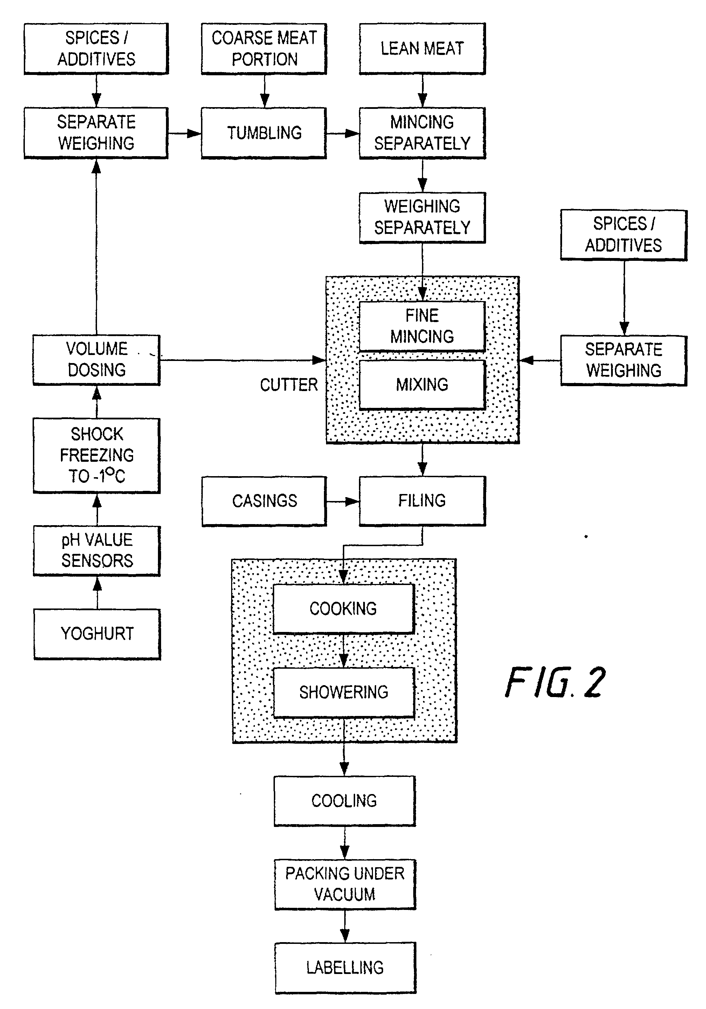

Figure 2 shows a flow diagram for manufacturing a boiled sausage in accordance with the invention.

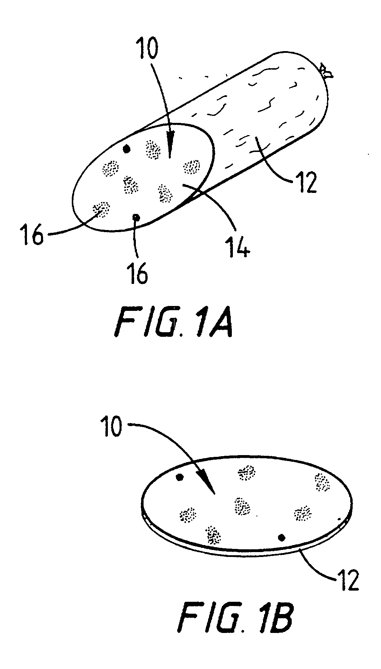

With reference to Figures 1A and 1B, a boiled sausage in accordance with the invention has a normal sausage shape and comprises an edible sausage material 10 that is stuffed into a conventional sausage casing 12.
Said sausage material 10 comprises a finely comminuted meat emulsion 14 and a coarse component 16 that is substantially uniformly dispersed through the emulsion 14. Said coarse component comprises coarsely ground pieces of meat and optional seasonings such, for example, as whole or coarsely ground peppercorns. In some embodiments, the coarse portion may be omitted.

Said finely comminuted meat emulsion 14 comprises a mixture of meat and yogurt which are substantially homogeneously blended together to form an emulsion. The meat pieces of the coarse component 16 may also be tumbled with yogurt.

The yogurt is manufactured in the traditional way using milk that is clarified and separated into cream and skimmed milk, and then standardised to achieve a desired fat content. The desired proportions of cream and skimmed milk are then blended together, and the mixture is pasteurised and then homogenised. The homogenised mixture is cooled to a temperature in the range of about 30 to about 50°C and then inoculated with a slow working yogurt starter culture comprising Streptococcus thermophilus, Lactobacillus acidophilus and Bifidobacteria. The mixture is then allowed to ferment for about four to six hours at 30 to 50°C, typically about 43°C, such that the mixture coagulates to form yogurt. The pH of the mixture is carefully monitored. When the pH of the yogurt reaches a target pH of about 5.1 to 5.2, the yogurt is stirred to allow accurate determination of the pH. Such stirring also has the effect of an arresting fermentation. When a target pH of 4.8 or more is reached, the yogurt is subjected to shock freezing to a temperature of about - 1°C. At this temperature, further fermentation of the yogurt is prevented. For such shock freezing, liquid nitrogen or a plate-heat-exchanger may be used.

In view of the need to control accurately the pH of the yogurt used in the process of the invention, it is desirable that the yogurt is made at the same site as sausage manufacture takes place, but it is envisaged that alternatively yogurt supplied from a nearby dairy may be used.

The chilled yogurt is then divided into two separate portions. A first portion is weighed for addition to the coarse component 16 of the sausage material 10. At the weighing stage, additional spices and/or additives may be added to the yogurt. Said coarse component is then tumbled with the yogurt for about two hours and is then ground.

A second portion of the yogurt is added in small batches to minced meat having a temperature of about 0°C. Said minced meat is finely comminuted with the yogurt to form an emulsion, and the yogurt assists in maintaining the temperature of the meat emulsion below about 12°C. Additional spices or additives may be added to the meat emulsion during comminution.

The coarse component is then mixed with the comminuted meat emulsion, such that the coarse component is substantially uniformly dispersed throughout the finely comminuted meat emulsion. The mixture is then stuffed into sausage casings using a stuffing horn of the kind well know to those skilled in the art. The resulting sausages are boiled at a temperature of about 72°C in the water and then showered, cooled, packed and labelled in the conventional manner.

The total amount of yogurt added to the sausage material is calculated such that the overall pH of the sausage material does not fall below about pH 5.5. In this way, the sausage material retains its ability to the bind water, so that a desirable juicy product is produced. At the same time, the yogurt having a target pH of about 4.8 or more has an acceptable yogurt flavour and aroma.

### Example 1

A specific example of a turkey putenjagdwurst with yogurt that can be made using the process described above has the following recipe:-

| **Finely Comminuted Meat Emulsion** | |
|---|---|
| Turkey thigh meat | 10.0% |
| Turkey white trim | 20.5% |
| Turkey dark trim | 20.5% |
| Chicken trim | 14.2% |
| Yogurt | 25.1% |
| Spices | 9.7% |
| | 100% |

| **Dry Ingredients for Meat Emulsion** | | |
|---|---|---|
| I. | Curing salt | 1.39% |
| | sodium citric | 0.56% |
| II. | Ground mustard seed | 0.8% |
| | lactose | 0.6% |
| III. | Super Pök | 0.25% |
| | (ascorbate, sugar) | |
| | Senator (spicemix Raps) | 0.57% |
| | Green Pepper (Raps) | 0.16% |
| | Glutalin (Raps) (flavourenhancer) | 0.19% |
| | HVP (hydrolysed vegetable protein) | 0.19% |
| IV. | Inulin (Frutafit) | 4.9% |
| V. | Liquid onion (Raps) | 0.09% |
| | liquid garlic (Raps) | 0.03% |
| | | 9.73% |

| **Coarse Component** | |
|---|---|
| Turkey thigh meat | 66.2% |
| Yogurt | 24.8% |
| Spices | 9.0% |
| | 100% |

The coarse component is ground through a 13mm plate.

| Spices for Coarse Component | | |
|---|---|---|
| I. | Curing salt | 1.85% |
| | sodium citric | 0.56% |
| II. | Inulin (Frutafit) | 3.1% |
| III. | Super Pök | 0.12% |
| | (ascorbate, sugar) | |
| | Green Pepper (Raps) | 0.12% |
| | Glutalin (Raps) | 0.26% |
| IV. | Spice-mix | |
| | Schinkenwurstgewürz | 0.70% |
| | (Wolf) | |
| | Senator (Raps) | 0.44% |
| V. | Garlic, liquid (Raps) | 0.22% |
| | fresh onion, liquid | 0.27% |
| | (Raps) | |
| VI. | Green pepper corns | 1.35% |
| | | 8.99% |

At the final mixing stage, 53% by weight of the comminuted meat emulsion was mixed with 43% wt of the coarse component.

### Example 2

A specific example of a pork meat putenjagdwurst with yogurt can be prepared using the method described above is as follows:-

| **Finely Comminuted Meat Emulsion** | |
|---|---|
| Lean pork trimmings | 32.1% |
| Pork shin meat | 20.5% |
| Pork neck fat | 15.2% |
| Yogurt | 25.1% |
| Spices | 7.1% |
| | 100% |

The emulsion is made in a bowl-chopper. Yogurt is added in small quantities.

| **Dry Ingredients for Emulsion** | | |
|---|---|---|
| I. | Curing salt | 1.39% |
| | sodium citric | 0.56% |
| II. | Ground mustard seed | 2.72% |
| | lactose | 0.9% |
| III. | Super Pök | 0.25% |
| | (ascorbate, sugar) | |
| | Senator (Spicemix Raps) | 0.56% |
| | Green Pepper (Raps) | 0.16% |
| | glutalin (raps) (flavour enhancer) | 0.19% |
| | EVP (hydrolysed vegetable protein) | 0.19% |
| IV. | liquid onion (Raps) | 0.09% |
| | liquid garlic (Raps) | 0.03% |
| | | 7.04% |

| **Coarse Meat Component** | |
|---|---|
| Pork shoulder 90VL | 67.9% |
| Yogurt | 24.8% |
| Spices | 7.3% |
| | 100% |

The coarse component is ground through a 13mm plate.

| **Spices for Coarse Component** | | |
|---|---|---|
| I. | Curing salt | 1.85% |
| | sodium citric | 0.56% |
| II. | lactose | 0.5% |
| | ground mustard seed | 0.98% |
| III. | Super Pök | 0.12% |
| | (ascorbate, sugar) | |
| | Green Pepper (Raps) | 0.12% |
| | Glutalin (Raps) | 0.26% |
| IV. | Spicemix | |
| | Schinkenwurstgewürz | 0,70% |
| | (Wolf) | |
| | Senator (Raps) | 0.44% |
| V. | Garlic, liquid (Raps) | 0.22% |
| | fresh onion, liquid (Raps) | 0.27% |
| VI. | Green pepper corns | 1.35% |
| | | 7.30% |

At the final mixing stage, 57% by weight of the finely comminuted pork meat emulsion is mixed with 43% weight of the coarse meat portion.

## Claims

1. A cooked sausage comprising a mixture of a meat emulsion and mild yogurt homogeneously dispersed through the meat emulsion; **characterised in that** said mixture comprises 10 to 40% by weight of said mild yogurt which is mild such that the pH of said mixture is 5.5 or more.

2. A cooked sausage as claimed in claim 1, **characterised in that** said yogurt has a pH of 4.8 or more.

3. A cooked sausage as claimed in claim 1 or claim 2, **characterised in that** said mild yogurt comprises an edible alkaline additive to neutralize the acidity of the yogurt.

4. A cooked sausage as claimed in claim 1, claim 2 or claim 3, **characterised in that** said mixture comprises 60 to 90% wt of said meat emulsion.

5. A cooked sausage as claimed in any preceding claim, **characterised in that** said mixture further comprises up to 10% by weight of various spices or other additives.

6. A cooked sausage as claimed in any preceding claim, **characterised in that** said mixture comprises up to 10% of a prebiotic additive.

7. A cooked sausage as claimed in claim 6, **characterised in that** said prebiotic additive is inulin.

8. A cooked sausage as claimed in any preceding claim, **characterised in that** said meat emulsion comprises red meat or poultry.

9. A method of making a cooked sausage which comprises forming a mixture of a meat emulsion and mild yoghurt having a pH of 4.8 or more or comprising an edible alkaline additive to neutralize the acidity of the yoghurt yogurt, in which mixture said yogurt is substantially homogeneously dispersed through the emulsion, forming the mixture into a sausage, and thereafter cooking the sausage; **characterised in that** said mixture comprises 10 to 40% by weight of said mild yogurt which is mild such that said mixture has a pH of 5.5 or more.

10. A method as claimed in claim 9 **characterised in that** said mild yogurt is prepared by inoculating a milk mixture, monitoring the pH of the yogurt, and quenching fermentation of the yogurt when the pH reaches a desired value.

11. A method as claimed in claim 10 **characterised in that** fermentation of the yogurt is quenched by cooling the yogurt to a temperature in the range -2 to 6°C.

12. A method as claimed in claim 10 or 11, **characterised in that** said yogurt starter culture comprises a slow working yogurt culture.

13. A method as claimed in any of claims 9 to 12, **characterised in that** the mixture of meat and yogurt is formed into a sausage by extrusion through a stuffing horn into a flexible casing.

14. A method as claimed in any of claims 9 to 13, **characterised in that** said meat emulsion comprises an emulsion of finely comminuted meat and is formed by comminuting whole muscle, ground, minced or mechanically separated meat in the presence of said yogurt.

15. A method as claimed in claim 14, **characterised in that** said yogurt is added to the meat at a temperature of 0 to 6°C.

16. A method as claimed in claim 14 or 15, **characterised in that** said meat has a temperature prior to comminution of 0 to 8°C.

17. A method as claimed in any of claims 9 to 16, **characterised in that** the sausage is cooked by heating in an edible fluid.

18. A method as claimed in any of claims 9 to 17, **characterised in that** the sausage is cooked by boiling in water at a temperature in the range 60 to 80°C.

19. A method as claimed in any of claims 9 to 18, **characterised in that** said sausage is cooked in hot air and/or hot smoke.

## Patentansprüche

1. Gekochte Wurst, welche eine Mischung aus einer Fleisch-Emulsion und mildem Jogurt, der homogen durch die Fleisch-Emulsion dispergiert ist, enthält, **dadurch gekennzeichnet, dass** die Mischung zwischen 10 und 40 Gewichtsprozenten (Gew.%) des milden Joghurts enthält, der so mild ist, dass der pH der Mischung 5,5 oder größer ist.

2. Gekochte Wurst nach Anspruch 1, **dadurch gekennzeichnet, dass** der Joghurt einen pH von 4,8 oder mehr aufweist.

3. Gekochte Wurst nach Anspruch 1 oder 2, **dadurch gekennzeichnet, dass** der milde Joghurt einen essbaren basischen Zusatz zur Neutralisierung der Säure des Joghurts enthält.

4. Gekochte Wurst nach Anspruch 1, 2 oder 3, **dadurch gekennzeichnet, dass** die Mischung zwischen 60 und 90 Gew.% der Fleisch-Emulsion enthält.

5. Gekochte Wurst nach einem der vorangehenden Ansprüche, **dadurch gekennzeichnet, dass** die Mischung weiterhin bis zu 10 Gew.% von verschiedenen Gewürzen oder anderen Zusätzen enthält.

6. Gekochte Wurst nach einem der vorangehenden Ansprüche, **dadurch gekennzeichnet, dass** die Mischung bis zu 10 Gew.% eines präbiotischen Zusatzes enthält.

7. Gekochte Wurst nach Anspruch 6, **dadurch gekennzeichnet, dass** der präbiotische Zusatz Insulin ist.

8. Gekochte Wurst nach einem der vorangehenden Ansprüche, **dadurch gekennzeichnet, dass** die Fleisch-Emulsion rotes Fleisch oder Geflügel enthält.

9. Verfahren zur Herstellung einer gekochten Wurst, welches die Bildung einer Mischung aus einer Fleischemulsion und mildem Joghurt, welcher einen pH von 4,8 oder mehr aufweist oder einen essbaren basischen Zusatz zur Neutralisierung der Säure des Joghurts enthält, wobei der Joghurt in der Mischung im wesentlichen homogen durch die Emulsion dispergiert ist, die Formung der Mischung in eine Wurst und das anschließende Kochen der Wurst umfasst, **dadurch gekennzeichnet, dass** die Mischung zwischen 10 und 40 Gew.% des milden Joghurts umfasst, der so mild ist, dass die Mischung einen pH von 5,5 oder mehr aufweist.

10. Verfahren nach Anspruch 9, **dadurch gekennzeichnet, dass** der milde Joghurt durch Impfen einer Milchmischung, Überwachen des pH-Wertes des Joghurts und Abschrecken der Fermentierung des Joghurts, wenn der pH einen gewünschten Wert erreicht, hergestellt wird.

11. Verfahren nach Anspruch 10, **dadurch gekennzeichnet, dass** die Fermentierung des Joghurts durch eine Abkühlung des Joghurts auf eine Temperatur im Bereich von -2 bis 6 °C abgeschreckt wird.

12. Verfahren nach Anspruch 10 oder 11, **dadurch gekennzeichnet, dass** die Starter-Kultur des Joghurts eine langsam arbeitende Joghurt-Kultur enthält.

13. Verfahren nach einem der Ansprüche 9-12, **dadurch gekennzeichnet, dass** die Mischung von Fleisch und Joghurt durch Extrusion durch einen Fülltrichter in einen flexiblen Wurstdarm zu einer Wurst geformt wird.

14. Verfahren nach einem der Ansprüche 9-13, **dadurch gekennzeichnet, dass** die Fleisch-Emulsion eine Emulsion von fein zerkleinertem Fleisch enthält und durch Zerkleinerung von ganzem Muskelfleisch oder von gehacktem, durchgedrehtem oder mechanisch getrenntem Fleisch in der Gegenwart des Joghurts hergestellt wird.

15. Verfahren nach Anspruch 14, **dadurch gekennzeichnet, dass** der Joghurt bei einer Temperatur zwischen 0 und 6 °C zu dem Fleisch hinzugefügt wird.

16. Verfahren nach Anspruch 14 oder 15, **dadurch gekennzeichnet, dass** das Fleisch vor der Zerkleinerung eine Temperatur zwischen 0 und 8 °C aufweist.

17. Verfahren nach einem der Ansprüche 9-16, **dadurch gekennzeichnet, dass** die Wurst durch Erhitzen in einer essbaren Flüssigkeit gekocht wird.

18. Verfahren nach einem der Ansprüche 9-17, **dadurch gekennzeichnet, dass** die Wurst durch Sieden in Wasser bei einer Temperatur zwischen 60 und 80 °C gekocht wird.

19. Verfahren nach einem der Ansprüche 9-18, **dadurch gekennzeichnet, dass** die Wurst in heißer Luft und/oder heißem Rauch gekocht wird.

## Revendications

1. Saucisse cuite comprenant un mélange d'une émulsion de viande et du yaourt doux, dispersé de façon essentiellement homogène dans l'émulsion de viande; **caractérisée en ce que** ledit mélange comprend 10% à 40% en poids dudit yaourt doux, qui est doux de sorte que le pH dudit mélange est de 5,5 ou plus.

2. Saucisse cuite selon la revendication 1, **caractérisée en ce que** ledit yaourt doux présente un pH de 4,8 ou plus.

3. Saucisse cuite selon la revendication 1 ou 2, **caractérisée en ce que** ledit yaourt doux comprend un additif basique comestible pour neutraliser l'acidité du yaourt.

4. Saucisse cuite selon la revendication 1, 2 ou 3, **caractérisée en ce que** ledit mélange comprend 60% à 90% en poids de ladite émulsion de viande.

5. Saucisse cuite selon l'une quelconque des revendications précédentes, **caractérisée en ce que** ledit mélange comprend en outre jusqu'à 10% en poids de diverses épices ou autres produits d'addition.

6. Saucisse cuite telle que revendiquée dans l'une quelconque des revendications précédentes, **caractérisée en ce que** ledit mélange comprend jusqu'à 10% d'un additif prébiotique.

7. Saucisse cuite selon la revendication 6, **caractérisée en ce que** ledit additif prébiotique est l'inuline.

8. Saucisse cuite selon l'une quelconque des revendications précédentes, **caractérisée en ce que** ladite émulsion de viande comprend de la viande rouge ou de volaille.

9. Procédé pour fabriquer une saucisse cuite qui consiste à former un mélange d'une émulsion de viande et de yaourt doux ayant un pH de 4,8 ou plus ou comprenant un additif basique comestible pour neutraliser l'acidité du yaourt, mélange dans lequel ledit yaourt est dispersé de façon essentiellement homogène dans l'émulsion, à façonner le mélange en forme de saucisse; **caractérisé en ce que** ledit mélange comprend 10% à 40% en poids dudit yaourt doux, qui est doux de sorte que ledit mélange présente un pH de 5,5 ou plus.

10. Procédé selon la revendication 9, **caractérisé en ce que** ledit yaourt doux est préparé en inoculant un mélange lacté, en surveillant le pH du yaourt et en arrêtant la fermentation du yaourt lorsque le pH atteint une valeur souhaitée.

11. Procédé selon la revendication 10, **caractérisé en ce que** la fermentation du yaourt est arrêtée par refroidissement du yaourt, à une température située dans la gamme de -2°C à 6°C.

12. Procédé selon la revendication 10 ou 11, **caractérisé en ce que** ledit germe de ferment pour yaourt comprend un ferment pour yaourt à action lente.

13. Procédé selon l'une quelconque des revendications 9 à 12, **caractérisé en ce que** le mélange de viande et de yaourt est façonné en forme de saucisse par extrusion à travers une "corne de bourrage" dans un boyau flexible.

14. Procédé selon l'une quelconque des revendications 9 à 13, **caractérisé en ce que** ladite émulsion de viande comprend une émulsion de viande finement hachée et est formée en hachant du muscle entier, des viandes hachées, émincées ou séparées mécaniquement, en présence dudit yaourt.

15. Procédé selon la revendication 14, **caractérisé en ce que** ledit yaourt est ajouté à la viande à une température allant de 0°C à 6°C.

16. Procédé selon la revendication 14 ou 15, **caractérisé en ce que** ladite viande a une température, avant hachage, de 0°C à 8°C.

17. Procédé selon l'une quelconque des revendications 9 à 16, **caractérisé en ce que** la saucisse est cuite par chauffage dans un fluide comestible.

18. Procédé selon l'une quelconque des revendications 9 à 17, **caractérisé en ce que** la saucisse est cuite par ébullition dans l'eau, à une température située dans la gamme de 60°C à 80°C.

19. Procédé selon l'une quelconque des revendications 9 à 18, **caractérisé en ce que** ladite saucisse est cuite dans de l'air chaud et/ou de la fumée chaude.
